# FASCICULE DE BREVET EUROPEEN

(11) **EP 3 033 857 B1**
(45) Date de publication et mention de la délivrance du brevet: **11.07.2018**
(21) Numéro de dépôt: 14814839.8
(22) Date de dépôt: 16.12.2014
(51) Int. Cl.: H04L 9/32, G06F 21/44, G06K 19/073, G06K 19/077

(54) **AUTHENTIFICATION DE CODE BINAIRE**
BINÄRCODE-AUTHENTIFIZIERUNG
BINARY CODE AUTHENTICATION

(30) Priorité: 16.12.2013 FR 1362677
(43) Date de publication de la demande: 22.06.2016
(73) Titulaire: Morpho, 92130 Issy-les-Moulineaux (FR)
(72) Inventeur: PEPIN, Cyrille, F-92130 Issy les Moulineaux (FR); URVOY, Johann, F-92130 Issy les Moulineaux (FR)
(74) Mandataire: Cabinet Plasseraud
(86) Numéro de dépôt international: PCT/EP2014/077999
(87) Numéro de publication internationale: WO 2015/091511

(56) Documents cités:
- US-B1- 6 588 673
- Alfred Menezes ET AL: "Handbook of Applied Cryptography, Chap 10: Identification and Entity Authentication" In: "Handbook of Applied Cryptography; [CRC PRESS SERIES ON DISCRETE MATHEMATICS AND ITS APPLICATIONS]", 1 janvier 1997 (1997-01-01), CRC Press, XP055141231, pages 385-424, item (v); page 390

## Description

La demande concerne notamment la sécurisation et l'authentification d'un code stocké dans une carte à puce.

Il existe de nombreuses techniques connues pour s'assurer qu'un code stocké dans une carte à puce est authentique.

Certaines ont été standardisées. C'est le cas notamment des techniques de signature d'applet (notamment java) spécifiées par le consortium GlobalPlatform sur la base de la spécification dite Open Platform de la société VISA Inc. Cependant, ces techniques ne permettent pas nécessairement l'authentification aisée d'un code binaire chargé dans une carte à puce par un administrateur de la carte.

Il est également connu de transmettre à la carte à puce une commande GetData récupérant un numéro de version du code. Mais si un attaquant parvient à modifier le numéro de version et/ou le code (la cohérence des deux n'étant pas vérifiée par la carte à puce), cette technique ne constitue pas une garantie de l'authenticité du code.

Il est également connu de calculer un CRC du code. Cependant, ce CRC n'est calculé que sur le code binaire, indépendamment du code source.

L'invention vise à améliorer la situation.

Un aspect de l'invention concerne un procédé de stockage sécurisé d'un code binaire dans une carte à puce, comprenant :
/a/ le calcul, par un système de stockage sécurisé, d'un premier hash à partir d'un code source, ledit code source correspondant au code binaire ;
/b/ le stockage, par le système de stockage sécurisé, du premier hash et du code binaire dans la carte à puce ;
/c/ la transmission, par le système de stockage sécurisé à un système d'authentification, d'un nombre aléatoire et d'un troisième hash, le troisième hash étant calculé à partir d'une concaténation du premier hash, d'un deuxième hash et du nombre aléatoire, le deuxième hash étant calculé à partir du code binaire.

Ce procédé de stockage sécurisé est avantageux en ce qu'il permet notamment à un fournisseur de cartes à puce d'apporter une assurance accrue de l'authenticité d'un code binaire qu'il a stocké dans une carte à puce. Cela peut également s'appliquer à des partenaires du fournisseur de cartes à puce développant des applications pour la carte à puce, ou fournissant des services de personnalisation de cartes à puce (ces services comprenant le chargement d'applications dans la carte à puce). Le code binaire de telles applications peut ainsi être vérifié. Une personne habilitée à vérifier l'authenticité du code binaire peut effectuer aisément une vérification en comparant le troisième hash à un troisième hash recalculé grâce à des informations issues de la carte à puce.

Un aspect de l'invention concerne un procédé d'authentification d'un code binaire stocké dans une carte à puce, comprenant :
/d/ l'obtention, par un système d'authentification, d'un troisième hash de référence ;
/e/ l'obtention, par le système d'authentification, d'un troisième hash effectif à partir d'une concaténation d'un premier hash, d'un deuxième hash et d'un nombre aléatoire, le premier hash étant stocké dans la carte à puce, le deuxième hash étant calculé à partir du code binaire à authentifier ;
/f/ l'authentification, par le système d'authentification, du code binaire sur la base d'une comparaison d'un troisième hash de référence et du troisième hash effectif.

Le procédé d'authentification permet par exemple à une personne habilitée de vérifier que le contenu de la carte est conforme à ce qu'il est censé être.

La personne habilitée peut appartenir par exemple à un laboratoire d'évaluation (tel qu'un CESTI). Un laboratoire d'évaluation peut être par exemple une entité certifiant la conformité d'une carte à puce à un certain niveau (par exemple EAL5) des critères communs (ISO/CEI 15408), ou encore à un certain niveau ITSEC (standard obsolète mais encore parfois utilisé en France). Le laboratoire d'évaluation peut également être, toujours à titre d'exemple non limitatif, une entité en charge d'une certification Visa ou MasterCard (nécessaire pour pouvoir produire ces types de cartes bancaires). Il peut également s'agir plus généralement de toute certification, qu'elle contrôle la sécurité et/ou la conformité aux exigences plus générales (y compris purement fonctionnelles) d'un marché donné (cartes bancaires, cartes pour téléphonie cellulaire telles que cartes SIM ou USIM, cartes de santé, cartes de permis de conduire, cartes d'identité électronique, etc.).

Le procédé peut également être mis en oeuvre par des équipes de support technique. Un utilisateur final de carte à puce, ou encore un développeur d'applications pour cartes à puce, peuvent en effet rencontrer une difficulté justifiant de renvoyer une carte à puce à un service de support technique du fournisseur de la carte à puce considérée. Ce service de support technique (ou toute autre personne habilitée à accéder aux informations nécessaires pour vérifier l'authenticité d'un code binaire) peut s'assurer, de façon simple (grâce à l'invention) de l'authenticité des codes binaires protégés selon les modes de réalisation décrits.

Un autre aspect de l'invention concerne un programme d'ordinateur comprenant des suites d'instructions mettant en oeuvre les étapes d'un procédé selon les précédents aspects de l'invention lorsqu'elles sont exécutées par des processeurs.

Un autre aspect de l'invention concerne des supports de stockage non transitoires lisibles par ordinateur comprenant un programme d'ordinateur selon le précédent aspect de l'invention.

Un autre aspect de l'invention concerne un système de stockage sécurisé,
le système de stockage sécurisé étant agencé pour calculer un premier hash à partir d'un code source, ledit code source correspondant à un code binaire ;
le système de stockage sécurisé étant agencé pour stocker le premier hash et le code binaire dans la carte à puce ;
le système de stockage sécurisé étant agencé pour transmettre à un système d'authentification un nombre aléatoire et un troisième hash, le troisième hash étant calculé à partir d'une concaténation du premier hash, d'un deuxième hash et du nombre aléatoire, le deuxième hash étant calculé à partir du code binaire.

Ce système de stockage sécurisé est avantageux en ce qu'il permet la mise en oeuvre d'un procédé de stockage sécurisé d'un code binaire dans une carte à puce selon un aspect de l'invention.

Un autre aspect de l'invention concerne un système d'authentification pour authentification d'un code binaire stocké dans une carte à puce,
le système d'authentification étant agencé pour obtenir un troisième hash de référence ;
le système d'authentification étant agencé pour obtenir un troisième hash effectif à partir d'une concaténation d'un premier hash, d'un deuxième hash et d'un nombre aléatoire, le premier hash étant stocké dans la carte à puce, le deuxième hash étant calculé à partir du code binaire à authentifier ;
le système d'authentification étant agencé pour authentifier le code binaire sur la base d'une comparaison d'un troisième hash de référence et du troisième hash effectif.

Ce système d'authentification est avantageux en ce qu'il permet la mise en oeuvre d'un procédé d'authentification d'un code binaire stocké dans une carte à puce selon un aspect de l'invention.

D'autres aspects, buts et avantages de l'invention apparaîtront de manière non limitative à la lecture de la description de quelques uns de ses modes de réalisation.

L'invention sera également mieux comprise à l'aide des dessins, sur lesquels :
- la Figure 1 illustre un système de sécurisation d'une carte à puce SC comprenant un système de stockage sécurisé S_SYS et un système d'authentification A_SYS ;
- la Figure 2 illustre différentes étapes d'un procédé selon un mode de réalisation de l'invention ;
- la Figure 3 illustre différentes étapes d'un procédé selon un autre mode de réalisation de l'invention.

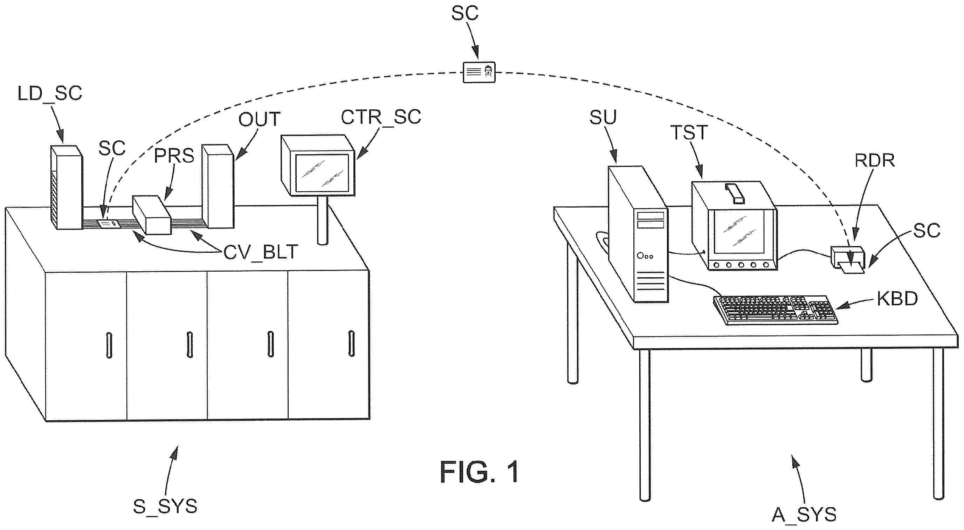

La figure 1 illustre un système de sécurisation d'une carte à puce SC comprenant un système de stockage sécurisé S_SYS mis en oeuvre par un système de personnalisation, et un système d'authentification A_SYS mis en oeuvre par un système de test.

Le système de personnalisation, qui peut être installé dans une usine, comprend un meuble surmonté d'un écran de contrôle CTR_SC. Le système de personnalisation comprend une colonne de chargement LD_SC de cartes à puce, représentée remplie aux deux-tiers de cartes à puce vierges. Une carte à puce SC extraite de la colonne de chargement LD_SC est transportée à l'aide d'un tapis roulant CV_BLT vers un module de personnalisation électrique PRS, puis, une fois la personnalisation électrique effectuée, vers une colonne d'empilement OUT (dans laquelle les cartes personnalisées sont entreposées). Le module de personnalisation électrique PRS est connecté par un lien sécurisé (non représenté) à un environnement de développement (non représenté) et par un autre lien sécurisé (non représenté) au système d'authentification A_SYS. Ce module de personnalisation électrique PRS est agencé pour recevoir, depuis l'environnement de développement, un premier hash d'un code source (alternativement, le module de personnalisation électrique PRS est agencé pour recevoir, depuis l'environnement de développement, le code source proprement dit et pour en calculer le hash, dénommé premier hash). Le module de personnalisation électrique PRS est agencé pour enregistrer dans la carte à puce SC ce premier hash. Le module de personnalisation PRS est agencé pour recevoir, depuis l'environnement de développement, un code binaire correspondant à une version compilée du code source, et pour enregistrer ce code binaire dans la carte à puce SC. Le module de personnalisation électrique PRS est également agencé pour calculer un deuxième hash égal au hash du code binaire, pour générer un nombre aléatoire, et pour calculer un troisième hash égal au hash d'une concaténation du premier hash, du deuxième hash et du nombre aléatoire. Le module de personnalisation électrique PRS est agencé pour transmettre le troisième hash et le nombre aléatoire au système d'authentification (via le lien sécurisé).

Le système d'authentification A_SYS mis en oeuvre par un système de test comprend une table sur laquelle sont posés une unité centrale SU (associée à un écran non représenté), une machine de test TST connectée à l'unité centrale SU, un clavier KBD connecté à l'unité centrale SU, et un lecteur de carte RDR connecté à la machine de test TST. La carte à puce SC personnalisée électriquement par le module de personnalisation électrique PRS est désormais connectée dans le lecteur de carte RDR, qui peut être un lecteur de carte de type contact ou sans contact (c'est un lecteur de type contact qui est représenté sur la figure 1). Avant d'effectuer les diagnostics requis, il est proposé de vérifier que le code binaire qui fera l'objet des diagnostics est le bon. A cette fin, la machine de test TST, connectée par le lien sécurisé au module de personnalisation électrique PRS via l'unité centrale SU, obtient le troisième hash et le nombre aléatoire. Elle demande alors à la carte à puce SC (via le lecteur RDR) de calculer le troisième hash sur la base du premier hash et du code binaire stockés dans la carte à puce SC, et du nombre aléatoire reçu. La carte à puce SC répond en retournant le troisième hash effectif. S'il est égal au troisième hash reçu, l'authentification du code binaire est prononcée.

Selon une mise en oeuvre possible, le système de stockage sécurisé S_SYS (par exemple son module de personnalisation PRS) transmet le deuxième hash et le code binaire au système d'authentification A_SYS. Le système d'authentification A_SYS est ainsi en mesure de recalculer ce deuxième hash.

A partir du premier hash, du deuxième hash et du nombre aléatoire, le système d'authentification A_SYS calcule un troisième hash.

La carte à puce possède (stocke) le premier hash.

Le système d'authentification A_SYS possède le deuxième hash (et est capable de le recalculer). Il possède également le troisième hash et le nombre aléatoire correspondant et peut récupérer le premier hash (stocké dans la carte à puce) si la carte à puce l'y autorise. Ce troisième hash fourni au système d'authentification A_SYS permet d'établir la non-modification du code binaire et son authenticité. Le système d'authentification A_SYS est en mesure de recalculer et vérifier ce troisième hash.

Le système d'authentification A_SYS demande à la carte à puce de calculer un hash basé sur les éléments suivants: premier hash, deuxième hash et nombre aléatoire. La carte à puce retourne (si elle est authentique) le troisième hash connu du système d'authentification A_SYS.

Pour s'assurer que la carte à puce effectue un vrai calcul, le système d'authentification A_SYS modifie le nombre aléatoire (le remplace par un autre nombre aléatoire), recalcule un troisième hash après avoir récupéré le premier hash, et compare le résultat avec un troisième hash que la carte à puce calcule sur la base des éléments qui lui sont fournis selon une procédure telle que décrite au paragraphe précédent (avec le nombre aléatoire modifié).

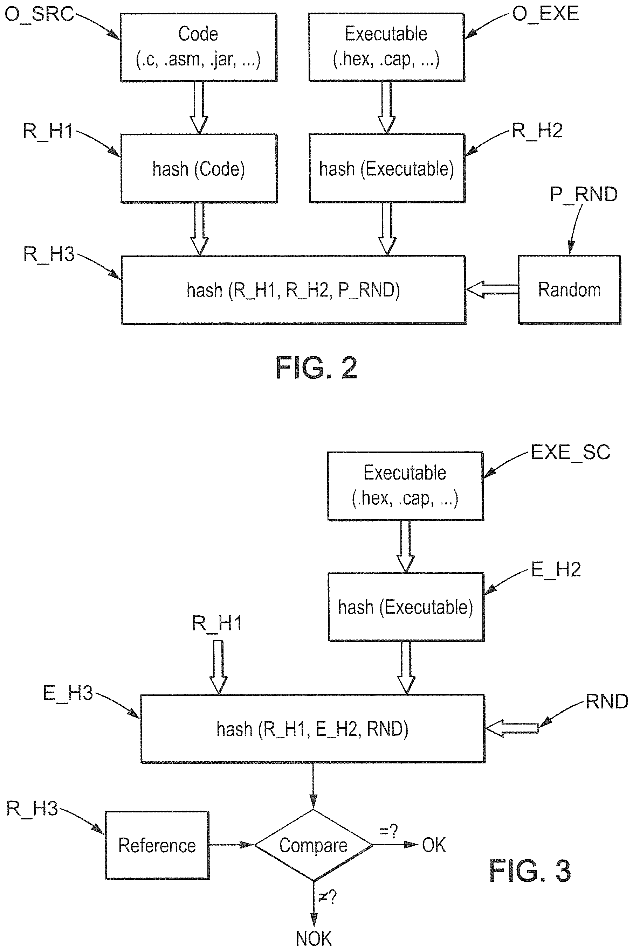

La figure 2 illustre le calcul d'un troisième hash de référence par un système de stockage sécurisé selon un mode de réalisation possible de l'invention.

Une première opération consiste à calculer le premier hash R_H1 d'un code source O_SRC. Une deuxième opération consiste à calculer le deuxième hash R_H2 d'un code binaire O_EXE correspondant au code source O_SRC. Une troisième opération consiste à générer un nombre aléatoire P_RND. Ces trois opérations peuvent être effectuée dans un ordre arbitraire, voire être effectuées en parallèle si l'architecture du système de stockage sécurisé le permet (par exemple s'il s'agit d'un système multitâche).

Enfin, un troisième hash R_H3 est calculé par application d'un algorithme de hachage à une concaténation du premier hash R_H1, du deuxième hash R_H2, et du nombre aléatoire RND.

La figure 3 illustre le calcul d'un troisième hash effectif par un système d'authentification selon un mode de réalisation possible de l'invention, et sa comparaison à un troisième hash de référence à des fins d'authentification.

Sur demande du système d'authentification, une carte à puce stockant un code binaire EXE_SC dont on veut vérifier l'authenticité calcule un deuxième hash E_H2 de ce code binaire. Le système d'authentification transmet un nombre RND à la carte à puce (avant ou après calcul du deuxième hash E_H2, voire pendant pour une carte à puce multitâche, ce qui n'est pas courant). La carte à puce détermine alors une concaténation d'un premier hash qu'elle a préalablement stocké, du deuxième hash E_H2 qu'elle vient de calculer et du nombre RND, puis calcule un troisième hash E_H3 de cette concaténation. La concaténation est effectuée dans un ordre arbitraire mais convenu d'avance (correspondant à celui utilisé pour le calcul d'un troisième hash de référence R_H3). La carte à puce retourne ce troisième hash E_H3 au système d'authentification. Le système d'authentification compare ce troisième hash E_H3 à un troisième hash de référence R_H3. Si les deux hash sont égaux, le code binaire EXE_SC est authentifié.

Des variantes possibles sont décrites ci-après.

Selon un premier mode de réalisation, un procédé de stockage sécurisé d'un code binaire O_EXE (exécutable officiel) dans une carte à puce SC, comprend le calcul, par un système de stockage sécurisé S_SYS, d'un premier hash R_H1 à partir d'un code source O_SRC (code source officiel), ledit code source correspondant au code binaire O_EXE. Ainsi, le code binaire O_EXE peut-il être le résultat de la compilation du code source O_SRC.

Le procédé de stockage sécurisé comprend le stockage, par le système de stockage sécurisé S_SYS, du premier hash R_H1 et du code binaire O_EXE dans la carte à puce SC. Ces deux stockages sécurisés sont avantageusement effectués lors d'une même session (par exemple de manière consécutive). Ils peuvent être stockés dans des zones différentes de la carte à puce (le premier hash pouvant être par exemple stocké dans une zone sécurisée, alors que le code binaire peut-être, le cas échéant, stocké dans une zone moins sécurisée). La carte à puce lie les enregistrements respectifs du premier hash et du code exécutable. Par exemple, elle place ces deux enregistrements de manière contigüe (ce qui peut supposer qu'ils soient placés dans une même zone mémoire - par exemple dans une zone mémoire sécurisée), ou encore elle les associe chacun à un même index (commun), ou encore elle associe chacun des enregistrements à un pointeur vers l'autre enregistrement.

Le procédé de stockage sécurisé comprend également la transmission, par le système de stockage sécurisé S_SYS à un système d'authentification A_SYS, d'un nombre aléatoire P_RND et d'un troisième hash R_H3, le troisième hash R_H3 étant calculé à partir d'une concaténation du premier hash R_H1, d'un deuxième hash R_H2 et du nombre aléatoire P_RND, le deuxième hash R_H2 étant calculé à partir du code binaire O_EXE. La concaténation du premier hash, du deuxième hash et du nombre aléatoire peut s'effectuer dans n'importe quel ordre, pour autant que le même ordre soit utilisé lors de la vérification ultérieure.

Selon une mise en oeuvre possible du premier mode de réalisation, le code source est un code en langage C. Il peut également s'agir de langage assembleur, ou encore de langage java, ou de tout autre langage (langage de Multos, langage C# de .NET, etc.). Selon une mise en oeuvre possible du premier mode de réalisation, le code source prend la forme d'un ou plusieurs fichiers textes. Les fichiers textes peuvent être notamment au format ASCII, ou encore dans un format UNICODE (UTF-8, UTF-16, etc.), ou encore dans tout autre format texte approprié. Selon un mode de réalisation alternatif, le fichier source peut également comprendre des ressources (métadonnées telles que images, sons, messages d'erreurs, etc.) et peut être compressé afin d'occuper moins de place (par exemple sous la forme d'un fichier .JAR pour des applets java). Selon une mise en oeuvre possible du premier mode de réalisation, lorsque le code source est réparti entre plusieurs fichiers source (qui peuvent être des fichiers textes ou des fichiers quelconques plus complexes tels que les fichiers .JAR précités), le calcul du premier hash s'opère après avoir préalablement concaténé le contenu de ces fichiers sources (en excluant donc toute donnée autre que le contenu, telle que l'ensemble des en-têtes des fichiers, etc.). La concaténation peut être opérée en respectant l'ordre alphabétique du nom des fichiers sources. Cet ordre alphabétique peut utiliser le cas échéant le chemin d'accès de chaque fichier source s'il est envisageable (dans l'environnement considéré) que des fichiers sources situés à des endroits différents aient le même nom. Bien sûr tout autre ordre peut être adopté par convention. Seul importe le fait que la même convention soit adoptée par les différentes parties amenées à calculer légitimement ce premier hash. D'autres mises en oeuvre sont possibles. A titre d'alternative, il est par exemple possible de tenir compte des en-têtes et noms de fichiers lors du calcul du hash (en concaténant non seulement le contenu des fichiers mais également les en-têtes). Il est également possible, par exemple, de compresser tous les fichiers sources composant le code source O_SRC au sein d'un fichier (par exemple un fichier ZIP), et de calculer le hash du fichier compressé résultant. Ceci suppose que deux compressions distinctes du même fichier conduisent au même fichier compressé (il faut que l'algorithme de compression soit déterministe, et que le fichier compressé n'inclue pas d'éléments susceptibles de fluctuer tels que la date et l'heure à laquelle la compression a été effectuée).

Le code binaire O_EXE peut être un fichier de type .hex, .cap, etc.

Selon une mise en oeuvre possible du premier mode de réalisation, le premier, le deuxième et le troisième hashs R_H1, R_H2 et R_H3 sont calculés avec le même algorithme de hachage (par exemple SHA-1, SHA-256, RIPEMD-160, MD5, ou tout autre algorithme approprié pour l'application visée ce qui peut même comprendre des hashs cryptographiquement très faibles tels que, par exemple, un algorithme de CRC tel que CRC-8, CRC-16, CRC-32 ou CRC-64). Des codes réputés cryptographiquement sûrs (tels que, à l'heure actuelle, SHA-1 ou SHA-256) sont avantageux. Bien entendu, il serait possible à titre d'alternative d'utiliser des algorithmes de hachage différents pour calculer chacun des hashs (ou pour certains d'entre eux seulement - par exemple SHA-1 pour le premier hash et SHA-256 pour les deuxième et troisième hashs).

Le nombre aléatoire P_RND est un nombre aléatoire prédéterminé, au sens où il est déterminé aléatoirement lors d'une phase initiale (par le système de stockage sécurisé S_SYS), et ne varie plus lors des opérations d'authentification ultérieures.

Selon une mise en oeuvre possible du premier mode de réalisation, le nombre aléatoire P_RND est généré par le système de stockage sécurisé S_SYS lui-même.

Selon une mise en oeuvre alternative du premier mode de réalisation, c'est la carte à puce SC qui génère le nombre aléatoire P_RND sur demande du système de stockage sécurisé S_SYS et (optionnellement) le transmet au système de stockage sécurisé S_SYS. Ainsi, le système de stockage sécurisé S_SYS peut simplement envoyer un ordre de génération (et éventuellement de stockage) du nombre aléatoire P_RND à la carte à puce, qui peut répondre, après avoir généré le nombre aléatoire P_RND, soit en transmettant au système de stockage sécurisé ce nombre aléatoire P_RND, soit en stockant ce nombre aléatoire P_RND dans sa (ou l'une de ses) mémoire(s), soit les deux (stockage et transmission au système de stockage sécurisé). Ceci peut être avantageux notamment lorsque la carte à puce comprend un crypto-processeur équipé d'un générateur de nombres aléatoires plus sécurisé que le générateur de nombres aléatoires du système de stockage sécurisé (c'est-à-dire à même de générer un nombre aléatoire P_RND moins prévisible).

Selon un deuxième mode de réalisation, un procédé de stockage sécurisé selon le premier mode de réalisation comprend le stockage, par le système de stockage sécurisé S_SYS, du nombre aléatoire P_RND dans la carte à puce SC. Comme il a été précédemment précisé, il est même possible que ce soit la carte à puce SC elle-même qui ait généré le nombre aléatoire P_RND pour le compte du système de stockage sécurisé S_SYS, auquel cas ce stockage peut être effectué sans même que le système de stockage sécurisé ait jamais directement accès au nombre aléatoire P_RND généré (ce qui peut accroître la sécurité, dans certaines circonstances, et notamment lorsque ce stockage dans la carte à puce SC est hautement sécurisé). Dans l'hypothèse de la génération par la carte à puce SC du nombre aléatoire P_RND, le stockage, par le système de stockage sécurisé S_SYS, du nombre aléatoire P_RND dans la carte à puce SC s'entend comme l'instruction donnée par le système de stockage sécurisé S_SYS à la carte à puce SC, de générer et stocker le nombre aléatoire P_RND.

La transmission, par le système de stockage sécurisé S_SYS à un système d'authentification A_SYS, du nombre aléatoire P_RND peut alors s'effectuer par l'intermédiaire de la carte à puce SC. Cette forme de transmission est soit cumulative soit alternative avec une transmission directe (sans passer par la carte à puce SC) du nombre aléatoire par le système de stockage sécurisé S_SYS au système d'authentification A_SYS.

Selon un troisième mode de réalisation, un procédé de stockage sécurisé selon le premier ou deuxième mode de réalisation comprend le stockage dans la carte à puce SC, par le système de stockage sécurisé S_SYS, d'au moins un parmi le deuxième hash R_H2 et le troisième hash R_H3.

Le stockage du deuxième hash R_H2 dans la carte à puce permet par exemple à la carte à puce de vérifier (lorsqu'elle détermine, selon une politique de sécurité donnée, que c'est nécessaire, ou lorsque cela lui est demandé par une entité extérieure) que le code binaire correspondant (qu'elle contient) est inchangé en recalculant son hash et en le comparant à R_H2.

Selon une alternative, le stockage du deuxième hash R_H2, s'il est sécurisé, et si le stockage du code binaire est lui-aussi sécurisé, permet le cas échéant de ne pas avoir à recalculer le hash du code binaire stocké, et de simplement utiliser la valeur stockée R_H2. Un attaquant souhaitant utiliser un faux code binaire (et n'ayant pas accès ni au code binaire original ni à son hash R_H2) n'est pas en mesure d'émuler R_H2, qui en général n'a pas besoin de sortir de la carte à puce SC (pouvant n'être utilisé que pour des calculs intermédiaires et/ou pour des vérifications internes).

En cas de stockage du troisième hash R_H3 dans la carte à puce, la transmission, par le système de stockage sécurisé S_SYS à un système d'authentification A_SYS, du troisième hash R_H3 peut s'effectuer par l'intermédiaire de la carte à puce SC. Selon une mise en oeuvre possible du troisième mode de réalisation, cette forme de transmission est cumulative avec une transmission directe (c'est-à-dire sans passer par la carte à puce SC) du troisième hash R_H3 par le système de stockage sécurisé S_SYS au système d'authentification A_SYS. Selon une autre mise en oeuvre possible du troisième mode de réalisation, cette forme de transmission est alternative (c'est-à-dire que la transmission par l'intermédiaire de la carte à puce SC peut remplacer une transmission directe).

Selon un quatrième mode de réalisation, un procédé d'authentification d'un code binaire EXE_SC stocké dans une carte à puce SC comprend l'obtention, par un système d'authentification A_SYS, d'un troisième hash de référence R_H3. Le fait que ce troisième hash R_H3 soit qualifié par l'adjectif « troisième » ne préjuge pas de son ordre d'obtention par rapport à d'autres hashs éventuels, mais n'est qu'un moyen de le nommer (et ainsi de le distinguer d'autres hashs).

Cette obtention est effectuée de manière sécurisée. Il s'agit par exemple d'une obtention réalisée lors d'une phase dite amont (par exemple lors d'une personnalisation électrique de la carte à puce par un fabricant de cartes à puce), c'est-à-dire avant déploiement de la carte à puce à son utilisateur final (porteur de carte) ou intermédiaire (organisme de certification, client B2B tel qu'une banque ou un opérateur téléphonique, etc.). Cette obtention sécurisée peut s'effectuer par communication sécurisée (par exemple à travers une communication via Internet sécurisée par SSL ou VPN, ou encore à travers un canal dit « secure channel » spécifié par GlobalPlatform) du troisième hash de référence R_H3 entre entités se faisant confiance. Le système d'authentification A_SYS peut ainsi (notamment) obtenir le troisième hash de référence R_H3 de la part d'un système de stockage sécurisé S_SYS ou de la part de la carte à puce SC elle-même. Il convient de noter qu'une carte à puce peut comprendre de multiples applications, certaines pouvant être sécurisées, d'autres pouvant ne pas l'être (ou l'être moins), et qu'il peut être utile, par exemple, de vouloir s'assurer de l'authenticité du code binaire d'une application faiblement sécurisée, en utilisant une application sécurisée. Une application sécurisée peut ainsi servir d'entité de stockage (et/ou de calcul) de différents hashs requis selon différents modes de réalisation de l'invention.

Selon le quatrième mode de réalisation, le procédé comprend l'obtention, par le système d'authentification A_SYS, d'un troisième hash effectif E_H3 à partir d'une concaténation d'un premier hash R_H1, d'un deuxième hash E_H2 et d'un nombre aléatoire RND, le premier hash R_H1 étant stocké dans la carte à puce SC, le deuxième hash E_H2 étant calculé à partir du code binaire EXE_SC à authentifier. Le système d'authentification A_SYS peut par exemple demander à la carte à puce SC de recalculer le troisième hash effectif E_H3. Selon une mise en oeuvre possible, le deuxième hash E_H2 est un deuxième hash effectif recalculé à chaque fois qu'il est nécessaire, sur la base du contenu réel (à l'instant considéré) du code binaire EXE_SC à authentifier. Ainsi, si ce code binaire EXE_SC est modifié, le deuxième hash E_H2 est modifié. Il est concevable, selon certaines mises en oeuvre, que la carte à puce soit en mesure d'assurer (par d'autres moyens) que le code binaire EXE_SC à authentifier n'est pas modifiable par un attaquant. Dans une telle hypothèse, et pour ces mises en oeuvre seulement, il est possible de stocker dans la carte à puce SC (de manière sécurisée) un deuxième hash E_H2 une fois pour toutes et de ne pas le recalculer à chaque fois. Ceci accélère le traitement, et n'apporte pas réellement de sécurité supplémentaire (la sécurité étant en l'occurrence garantie par un autre mécanisme), mais permet une interopérabilité accrue de l'authentification du code exécutable (entre différents types de cartes à puce, ou entre mêmes cartes à puce personnalisées différemment). Il est même possible, dans une telle hypothèse, de stocker directement le troisième hash effectif E_H3 pour un certain nombre aléatoire (en particulier pour un nombre aléatoire prédéterminé P_RND), de façon à ce que lorsque l'authentification est demandée sur la base de ce nombre aléatoire spécifique, elle soit accélérée (pas de recalcul). Afin d'éviter d'ouvrir une brèche de sécurité par attaque temporelle (« timing attack »), il est préférable de n'utiliser cette optimisation que lorsque la demande d'obtention de E_H3 reçue par la carte précise (en l'identifiant, mais sans la transmettre) que c'est une valeur aléatoire prédéterminée P_RND (connue à l'avance de la carte à puce SC) qui doit être utilisée. Autrement dit, si une fonction de demande d'obtention de E_H3 (mise en oeuvre par la carte à puce SC pour le compte du système d'authentification A_SYS) prend en paramètre un nombre aléatoire à utiliser par la carte à puce SC (et non pas simplement une référence explicite ou implicite à un nombre aléatoire prédéterminé qui est pré-stocké dans la carte à puce SC), il n'est généralement pas opportun d'un point de vue sécuritaire d'optimiser cette fonction en testant si ce nombre aléatoire passé en paramètre est égal à un nombre aléatoire pré-stocké, et dans cette hypothèse d'accélérer le traitement en renvoyant directement un résultat (E_H3) pré-stocké correspondant. En effet, une telle optimisation (de vitesse d'exécution) pourrait permettre à un attaquant de deviner le nombre aléatoire prédéterminé (s'il n'est pas trop long) par test exhaustif, ou, indépendamment de la longueur de ce nombre aléatoire, de vérifier si un nombre donné présumé être potentiellement le nombre aléatoire prédéterminé l'est effectivement (par comparaison du temps de calcul de E_H3 avec le temps de calcul pour un nombre aléatoire quelconque).

Le procédé comprend l'authentification, par le système d'authentification A_SYS, du code binaire EXE_SC sur la base d'une comparaison d'un troisième hash de référence R_H3 et du troisième hash effectif E_H3. Ainsi, si le troisième hash de référence R_H3 pertinent et le troisième hash effectif E_H3 (censé lui correspondre) sont égaux, le procédé considère que le code binaire EXE_SC est authentique.

Le troisième hash de référence R_H3 est distinct du (mais, en l'absence de fraude, égal au) troisième hash effectif E_H3. De même, le deuxième hash de référence R_H2 est distinct du (mais, en l'absence de fraude, égal au) deuxième hash effectif E_H2.

Calculer le troisième hash effectif E_H3 dans la carte à puce SC est avantageux en ce que cela évite de sortir d'une carte à puce SC authentique le deuxième hash E_H2 authentique (cas d'une carte à puce SC stockant un code binaire authentique). De plus, dans le cas où le nombre aléatoire utilisé est un nombre aléatoire prédéterminé P_RND connu à l'avance de la carte à puce SC, cela évite également de sortir le premier hash R_H1 de la carte à puce pour recalculer un troisième hash de référence R_H3. Utiliser un nombre aléatoire prédéterminé P_RND (c'est-à-dire généré aléatoirement lors d'une phase initiale mais ensuite inchangé au cours des authentifications successives) peut néanmoins (dans certaines circonstances) présenter un risque de rejeu (en cas d'interception par un attaquant).

Selon une mise en oeuvre possible du quatrième mode de réalisation, la comparaison du troisième hash de référence R_H3 et du troisième hash effectif est effectuée par le système d'authentification A_SYS. Cependant, selon une variante possible, la comparaison peut être effectuée par la carte à puce SC elle-même, qui doit alors mettre en oeuvre une moyen sécurisé d'informer le système d'authentification A_SYS du résultat (il serait sinon possible de réaliser une carte à puce piratée répondant toujours que l'authentification est correcte).

L'obtention, par un système d'authentification A_SYS, d'un troisième hash de référence R_H3 n'exclut pas l'obtention de plusieurs troisièmes hashs de référence. Selon une mise en oeuvre possible du quatrième mode de réalisation, un seul troisième hash de référence R_H3 est obtenu. Selon une autre mise en oeuvre possible du quatrième mode de réalisation, plusieurs (par exemple deux) troisièmes hashs de référence R_H3 sont obtenus.

Selon une mise en oeuvre possible du quatrième mode de réalisation, le système d'authentification A_SYS obtient un troisième hash de référence R_H3 en le recevant (il peut par exemple le recevoir de la part d'un système de stockage sécurisé S_SYS, éventuellement via la carte à puce SC comme il a été exposé plus haut). Il est ainsi possible d'obtenir un premier troisième hash de référence (par exemple un premier troisième hash de référence calculé à l'aide d'un nombre aléatoire prédéterminé P_RND, et transmis par un système de stockage sécurisé S_SYS au système d'authentification A_SYS). Le système d'authentification A_SYS peut obtenir également (en plus du premier troisième hash de référence précité) un deuxième troisième hash de référence calculé à l'aide d'un nombre aléatoire RND généré par exemple par le système d'authentification lui-même. Le premier troisième hash de référence peut-être utilisé par exemple dans le cadre d'une authentification dite « statique » (s'appuyant sur un nombre aléatoire prédéterminé P_RND, qui est défini à l'avance par une entité tierce au système d'authentification A_SYS) alors que le deuxième troisième hash de référence peut-être utilisé par exemple dans le cadre d'une authentification dite « dynamique » (s'appuyant sur un nombre aléatoire RND défini à chaque tentative d'authentification par le système d'authentification A_SYS lui-même, et évitant ainsi le rejeu d'un troisième hash de référence qui aurait pu être préalablement intercepté par un attaquant). Il est également possible de procéder à une double authentification (impliquant deux comparaisons), l'une statique et l'autre dynamique.

Selon un cinquième mode de réalisation, un procédé d'authentification selon le quatrième mode de réalisation comprend la transmission du nombre aléatoire RND par le système d'authentification A_SYS à la carte à puce SC.

Ceci est avantageux car cela permet le calcul du troisième hash effectif E_H3 par la carte à puce SC pour un nombre aléatoire quelconque (et notamment un nombre aléatoire choisi par le système d'authentification A_SYS lui-même), évitant ainsi certaines attaques.

Il est ainsi possible de mettre en place dans la carte à puce SC une commande de calcul de troisième hash effectif, dont l'un des paramètres d'entrée est le nombre aléatoire. Par exemple, pour une carte à puce mettant en oeuvre un protocole dénommé T=0 (standardisé dans la norme ISO 7816), ou encore pour le protocole T=CL (standardisé dans la norme ISO 14443) une commande APDU peut comprendre un paramètre dit P3 (dans le protocole T=0) correspondant à la longueur du nombre aléatoire (si le nombre aléatoire est transmis) et à zéro sinon. Au cas où P3 serait égal à zéro, la carte peut utiliser un nombre aléatoire P_RND prédéterminé stocké dans la carte. Comme indiqué précédemment, si un nombre aléatoire est transmis comme paramètre d'entrée, il est avantageux de ne pas vérifier si le nombre aléatoire reçu par la carte correspond à un nombre aléatoire prédéterminé P_RND déjà stocké dans la carte, ou du moins, si cette vérification est néanmoins effectuée, de ne pas effectuer un traitement optimisé permettant à un attaquant de deviner si le paramètre d'entrée correspond à un nombre aléatoire prédéterminé (par exemple à l'aide d'une attaque temporelle). En revanche, un traitement optimisé est envisageable si P3 est nul (dans ce cas, il est connu par construction que le nombre aléatoire utilisé est un nombre aléatoire prédéterminé).

Selon un sixième mode de réalisation, le nombre aléatoire RND d'un procédé de stockage sécurisé selon le quatrième ou le cinquième mode de réalisation est un nombre aléatoire prédéterminé P_RND reçu par le système d'authentification A_SYS (permettant une authentification statique telle que décrite plus haut). L'obtention, par le système d'authentification A_SYS, du troisième hash de référence R_H3 comprend alors (ou consiste en) la réception, par le système d'authentification A_SYS, du troisième hash de référence R_H3. Ainsi, ce troisième hash de référence R_H3 n'a pas besoin d'être recalculé par le système d'authentification A_SYS, mais peut être simplement reçu (de manière sécurisée). Il peut être reçu directement ou indirectement. Par exemple, le nombre aléatoire prédéterminé P_RND peut être généré par la carte à puce SC (par exemple lors de sa personnalisation électrique initiale par un fabricant de carte à puce). Il peut également être généré par un système de stockage sécurisé S_SYS. Dans cette dernière hypothèse, le nombre aléatoire prédéterminé P_RND généré par le système de stockage sécurisé S_SYS peut être soit directement transmis par le système de stockage sécurisé S_SYS au système d'authentification A_SYS (par exemple via un réseau de télécommunications, tel qu'Internet, mais de préférence à l'aide d'un protocole sécurisé tel qu'un VPN IPSEC, ou encore via SSL), soit transmis indirectement, par exemple en étant stocké dans la carte à puce SC par le système de stockage sécurisé S_SYS puis lu par le système d'authentification A_SYS depuis la carte à puce SC. De même, le troisième nombre aléatoire de référence R_H3 peut être transmis directement ou indirectement (par exemple en passant par la carte à puce SC) du système de stockage sécurisé S_SYS vers le système d'authentification A_SYS. Selon une mise en oeuvre possible, une transmission directe du nombre aléatoire prédéterminé P_RND (respectivement du troisième hash de référence R_H3) est combinée à un stockage du nombre aléatoire prédéterminé P_RND (respectivement du troisième hash de référence R_H3) dans la carte à puce SC. Le système d'authentification A_SYS peut ainsi obtenir le nombre aléatoire prédéterminé P_RND (respectivement le troisième hash de référence R_H3) de plusieurs manières (réception directe et réception depuis la carte à puce SC), afin de vérifier que les données reçues sont les mêmes indépendamment du mode d'obtention utilisé. Selon une autre mise en oeuvre possible, une transmission directe du nombre aléatoire prédéterminé P_RND (respectivement du troisième hash de référence R_H3) exclut tout stockage du nombre aléatoire prédéterminé P_RND (respectivement du troisième hash de référence R_H3) dans la carte à puce SC.

Selon un septième mode de réalisation, le nombre aléatoire RND d'un procédé de stockage sécurisé selon le quatrième ou le cinquième mode de réalisation comprend un choix du nombre aléatoire RND par le système d'authentification A_SYS et la lecture du premier hash R_H1 stocké dans la carte à puce SC par le système d'authentification A_SYS. L'obtention, par le système d'authentification A_SYS, du troisième hash de référence R_H3 comprend (ou consiste à faire) le calcul du troisième hash de référence R_H3 par le système d'authentification A_SYS. Le système d'authentification A_SYS est supposé disposer du code binaire dont il veut vérifier l'authenticité et peut donc en recalculer le hash R_H2. Alternativement (ou cumulativement), il peut obtenir R_H2 (de préférence de façon sécurisée, de façon similaire à ce qui peut être fait pour R_H3).

Avantageusement, la lecture par le système d'authentification A_SYS du premier hash R_H1 à partir de la carte à puce est sécurisée. En effet, ce premier hash R_H1 est une information sensible qui pourrait faciliter une attaque par un tiers. La sécurisation peut s'appuyer sur un canal sécurisé de type spécifié dans le standard de facto GlobalPlatform mentionné précédemment. Il est avantageux de subordonner la lecture du premier hash R_H1 à la connaissance d'un secret autre qu'un PIN code utilisateur, car ce type d'information (premier hash R_H1) n'a en principe pas vocation à être accessible à l'utilisateur final de la carte à puce SC (détenteur classique du PIN code), mais plutôt à un administrateur ou utilisateur intermédiaire (opérateur de télécommunications, banque, etc.) de la carte à puce. Il est néanmoins possible, par exemple, de prévoir un PIN code dédié (distinct du PIN code utilisateur) pour protéger l'accès au premier hash R_H1.

Selon un huitième mode de réalisation, un procédé de sécurisation d'une carte à puce SC comprend un procédé de stockage sécurisé selon l'un des premier au troisième modes de réalisation, et un procédé d'authentification selon l'un des quatrième au septième modes de réalisation. Le procédé de stockage sécurisé sert ainsi de préalable au procédé d'authentification ultérieur.

Selon un neuvième mode de réalisation, un programme d'ordinateur comprend des suites d'instructions mettant en oeuvre les étapes du procédé selon l'un des premier au huitième modes de réalisation lorsqu'elles sont exécutées par des processeurs. Ce programme peut être composé de sous programmes. Par exemple le programme peut comprendre un sous programme en langage assembleur (ou encore en langage C, javacard, .NET ou Multos) exécuté par un processeur de la carte à puce SC afin de permettre notamment à la carte à puce de recevoir le premier hash R_H1 et de le stocker, de calculer un deuxième hash E_H2, de calculer un hash E_H3, ou plus généralement d'effectuer toute étape (des modes de réalisations précités) qui incombe à la carte à puce (ou qui peut être exécutée optionnellement par la carte à puce). Le programme peut également comprendre un sous programme en langage C++ (ou encore en langage Visual Basic, Java, etc.) exécuté par un processeur (ou plusieurs processeurs) du système de stockage sécurisé afin d'effectuer toute étape (des modes de réalisations précités) qui incombe au système de stockage sécurisé (ou qui peut être exécutée optionnellement par le système de stockage sécurisé). Le programme peut également comprendre un sous programme en langage C++ (ou encore en langage Visual Basic, Java, etc.) exécuté par un processeur (ou plusieurs processeurs) du système d'authentification afin d'effectuer toute étape (des modes de réalisations précités) qui incombe au système d'authentification (ou qui peut être exécutée optionnellement par le système d'authentification).

Selon un dixième mode de réalisation, des supports de stockage non transitoires lisibles par ordinateur comprennent un programme d'ordinateur selon le neuvième mode de réalisation. Ainsi le dixième mode de réalisation peut consister par exemple en un disque dur (par exemple magnétique, optique ou SSD) d'un système de stockage sécurisé selon un mode de réalisation et une mémoire (par exemple de type ROM, Flash ou EEPROM) d'une carte à puce selon un mode de réalisation, ou en un disque dur (par exemple magnétique, optique ou SSD) d'un système d'authentification selon un mode de réalisation et une mémoire (par exemple de type ROM, Flash ou EEPROM) d'une carte à puce selon un mode de réalisation, ou encore en un disque dur (par exemple magnétique, optique ou SSD) d'un système d'authentification selon un mode de réalisation, un disque dur (par exemple magnétique, optique ou SSD) d'un système de stockage sécurisé selon un mode de réalisation et une mémoire (par exemple de type ROM, Flash ou EEPROM) d'une carte à puce selon un mode de réalisation. Chaque support de stockage stocke ainsi la partie pertinente qui le concerne. La mémoire de la carte à puce stocke ainsi les sous programmes de la carte à puce pour la mise en oeuvre du procédé selon des modes de réalisation de l'invention, le disque dur du système d'authentification stocke les sous programmes exécutés par le système d'authentification pour la mise en oeuvre du procédé selon des modes de réalisation de l'invention, et le disque dur du système de stockage sécurisé stocke les sous programmes exécutés par le système de stockage sécurisé pour la mise en oeuvre du procédé selon des modes de réalisation de l'invention.

Selon un onzième mode de réalisation, un système de stockage sécurisé S_SYS (qui est un système matériel, et non pas purement virtuel) est agencé pour calculer un premier hash R_H1 à partir d'un code source O_SRC, ledit code source O_SRC correspondant à un code binaire O_EXE. Ce calcul peut être effectué par un circuit électronique du système de stockage sécurisé, tel qu'un circuit électronique comprenant un microprocesseur et une mémoire associée, cette mémoire associée contenant un programme d'ordinateur approprié pour effectuer ce calcul. Le circuit électronique peut également être un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée.

Le système de stockage sécurisé S_SYS est agencé pour stocker le premier hash R_H1 et le code binaire O_EXE dans la carte à puce SC. Cette opération de stockage peut être effectuée par un circuit électronique du système de stockage sécurisé, tel qu'un circuit électronique comprenant un microprocesseur et une mémoire associée, cette mémoire associée contenant un programme d'ordinateur approprié pour effectuer ce stockage. Le circuit électronique peut également être un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée. Le circuit électronique peut comprendre des interfaces réseau ou d'autres types d'interfaces de communication électronique (telle qu'une interface de communication avec une carte à puce).

Le système de stockage sécurisé S_SYS est agencé pour transmettre à un système d'authentification A_SYS un nombre aléatoire P_RND et un troisième hash R_H3, le troisième hash R_H3 étant calculé à partir d'une concaténation du premier hash R_H1, d'un deuxième hash R_H2 et du nombre aléatoire P_RND, le deuxième hash R_H2 étant calculé à partir du code binaire O_EXE. Cette transmission et ces calculs peuvent être effectués par un circuit électronique du système de stockage sécurisé, tel qu'un circuit électronique comprenant un microprocesseur et une mémoire associée, cette mémoire associée contenant un programme d'ordinateur approprié pour effectuer ces transmissions et calculs. Le circuit électronique peut également être un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée. Le circuit électronique peut comprendre des interfaces réseau ou d'autres types d'interfaces de communication électronique.

Selon une mise en oeuvre possible du onzième mode de réalisation, le système de stockage sécurisé S_SYS est (ou comprend) un système de personnalisation électrique de cartes à puce. Un tel système comprend de façon connue un ordinateur, des systèmes de guidage de cartes à puce (par exemple des courroies de transmission), et des systèmes de programmation électrique (contact ou sans contact) de cartes à puce. Selon une mise en oeuvre possible du onzième mode de réalisation, le système de stockage sécurisé S_SYS comprend (éventuellement en plus du système de personnalisation électrique précité) un système de développement d'application (comprenant par exemple un environnement de développement logiciel et un compilateur), à partir duquel le code source original est produit. Ce code source peut ainsi être généré à l'intérieur du système de stockage sécurisé (mais selon une alternative possible, il est généré à l'extérieur du système de stockage sécurisé et lui est ensuite transmis afin de permettre le calcul du premier hash R_H1).

Selon une mise en oeuvre possible du onzième mode de réalisation, le système de stockage sécurisé S_SYS est agencé pour mettre en oeuvre un procédé selon l'un des premier, deuxième ou troisième modes de réalisation. A cette fin, il peut comprendre un (ou plusieurs) circuit(s) électronique(s) comprenant un microprocesseur et une mémoire associée, cette mémoire associée contenant un programme d'ordinateur approprié pour mettre en oeuvre lesdits procédés (en combinaison, le cas échéant, avec un programme d'ordinateur exécuté par la carte à puce). Chaque circuit électronique peut être, à titre d'alternative, un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée. Le circuit électronique peut comprendre des interfaces réseau ou d'autres types d'interfaces de communication électronique.

Un douzième mode de réalisation se rapporte à un système d'authentification A_SYS pour l'authentification d'un code binaire EXE_SC stocké dans une carte à puce SC. Ce système est un système matériel (et non purement virtuel). Il est agencé pour obtenir un troisième hash de référence R_H3. Cette obtention peut être réalisée à l'aide d'un circuit électronique (du système d'authentification) comprenant un microprocesseur et une mémoire associée, cette mémoire associée contenant un programme d'ordinateur approprié pour effectuer cette obtention. Le circuit électronique peut également être un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée. Le circuit électronique peut comprendre des interfaces réseau ou d'autres types d'interfaces de communication électronique.

Le système d'authentification A_SYS est agencé pour obtenir un troisième hash effectif E_H3 à partir d'une concaténation d'un premier hash R_H1, d'un deuxième hash E_H2 et d'un nombre aléatoire RND, le premier hash R_H1 étant stocké dans la carte à puce SC, le deuxième hash E_H2 étant calculé à partir du code binaire EXE_SC à authentifier. Cette obtention peut être réalisée à l'aide d'un circuit électronique (du système d'authentification) comprenant un microprocesseur et une mémoire associée, cette mémoire associée contenant un programme d'ordinateur approprié pour effectuer cette obtention. Le circuit électronique peut également être un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée.

Le système d'authentification A_SYS est agencé pour authentifier le code binaire EXE_SC sur la base d'une comparaison d'un troisième hash de référence R_H3 et du troisième hash effectif E_H3. Cette comparaison peut être réalisée à l'aide d'un circuit électronique (du système d'authentification) comprenant un microprocesseur et une mémoire associée, cette mémoire associée contenant un programme d'ordinateur approprié pour effectuer cette comparaison. Le circuit électronique peut également être un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée.

Selon une mise en oeuvre possible du douzième mode de réalisation, le système d'authentification A_SYS est une machine de tests de carte à puce. Une telle machine peut comprendre un ordinateur muni d'un lecteur (contact et/ou sans contact) de cartes à puce, l'ordinateur comprenant un support de stockage (tel qu'un disque dur) stockant un programme d'ordinateur pour tester la carte. La machine peut être agencée pour effectuer des tests visant à valider le fonctionnement de la carte à puce, à identifier l'origine d'une erreur (logicielle ou matérielle) observée lors d'une utilisation de la carte à puce, ou encore à vérifier le niveau de sécurité de la carte à puce.

Selon une mise en oeuvre possible du douzième mode de réalisation, le système d'authentification A_SYS est agencé pour mettre en oeuvre un procédé selon l'un des quatrième, cinquième, sixième ou septième modes de réalisation. A cette fin, il peut comprendre un (ou plusieurs) circuit(s) électronique(s) comprenant un microprocesseur et une mémoire associée, cette mémoire associée contenant un programme d'ordinateur approprié pour mettre en oeuvre lesdits procédés (en combinaison, le cas échéant, avec un programme d'ordinateur exécuté par la carte à puce). Chaque circuit électronique peut être, à titre d'alternative, un circuit électronique dédié, réalisé par exemple à l'aide d'un FPGA, d'un ASIC, d'un circuit micro-codé, d'un PAL, d'un GAL, d'un PLA, d'un SPLD, d'un CPLD d'un EPLD, ou de toute forme de logique câblée appropriée. Le circuit électronique peut comprendre des interfaces réseau ou d'autres types d'interfaces de communication électronique.

Selon une variante possible, le système d'authentification peut déléguer à la carte à puce l'exécution d'un procédé selon l'un des quatrième, cinquième, sixième ou septième modes de réalisation. Selon une autre variante, le système d'authentification a accès au code source et est agencé pour recalculer le premier hash (vérification accrue d'intégrité).

Selon un treizième mode de réalisation, un système de sécurisation d'une carte à puce SC comprend un système de stockage sécurisé S_SYS selon le onzième mode de réalisation et un système d'authentification A_SYS selon le douzième mode de réalisation. Ce système de sécurisation peut ainsi mettre en oeuvre un procédé selon le huitième mode de réalisation.

L'invention ne se limite pas aux formes de réalisation décrites ci-avant à titre d'exemple ; elle s'étend à d'autres variantes.

Les mémoires utilisables ne se limitent pas aux exemples donnés à titre purement illustratif mais couvrent tout type de mémoire fonctionnellement équivalent.

Les modes de réalisations décrits en relation avec le procédé selon l'invention peuvent être transposés aux systèmes, ainsi qu'aux programmes d'ordinateur et aux supports de stockage selon l'invention, et réciproquement.

## Revendications

1. Procédé de stockage sécurisé d'un code binaire (O_EXE) dans une carte à puce (SC), comprenant :
/a/ le calcul, par un système de stockage sécurisé (S_SYS), d'un premier hash (R_H1) à partir d'un code source (O_SRC), ledit code source (O_SRC) correspondant au code binaire (O_EXE) ;
/b/ le stockage, par le système de stockage sécurisé (S_SYS), du premier hash (R_H1) et du code binaire (O_EXE) dans la carte à puce (SC) ;
/c/ la transmission, par le système de stockage sécurisé (S_SYS) à un système d'authentification (A_SYS), d'un nombre aléatoire (P_RND) et d'un troisième hash (R_H3), le troisième hash (R_H3) étant calculé à partir d'une concaténation du premier hash (R_H1), d'un deuxième hash (R_H2) et du nombre aléatoire (P_RND), le deuxième hash (R_H2) étant calculé à partir du code binaire (O_EXE).

2. Procédé de stockage sécurisé selon la revendication 1, comprenant le stockage, par le système de stockage sécurisé (S_SYS), du nombre aléatoire (P_RND) dans la carte à puce (SC).

3. Procédé de stockage sécurisé selon l'une quelconque des revendications précédentes, comprenant le stockage dans la carte à puce (SC), par le système de stockage sécurisé (S_SYS), d'au moins un parmi le deuxième hash (R_H2) et le troisième hash (R_H3).

4. Procédé d'authentification d'un code binaire (EXE_SC) stocké dans une carte à puce (SC), comprenant :
/d/ l'obtention, par un système d'authentification (A_SYS), d'un troisième hash de référence (R_H3) ;
/e/ l'obtention, par le système d'authentification (A_SYS), d'un troisième hash effectif (E_H3) à partir d'une concaténation d'un premier hash (R_H1), d'un deuxième hash (E_H2) et d'un nombre aléatoire (RND), le premier hash (R_H1) étant stocké dans la carte à puce (SC), le deuxième hash (E_H2) étant calculé à partir du code binaire (EXE_SC) à authentifier ;
/f/ l'authentification, par le système d'authentification (A_SYS), du code binaire (EXE_SC) sur la base d'une comparaison d'un troisième hash de référence (R_H3) et du troisième hash effectif (E_H3).

5. Procédé d'authentification selon la revendication 4, comprenant la transmission du nombre aléatoire (RND) par le système d'authentification (A_SYS) à la carte à puce (SC).

6. Procédé d'authentification selon l'une quelconque des revendications 4 et 5, le nombre aléatoire (RND) étant un nombre aléatoire prédéterminé (P_RND) reçu par le système d'authentification (A_SYS), l'obtention, par le système d'authentification (A_SYS), du troisième hash de référence (R_H3) comprenant la réception, par le système d'authentification (A_SYS), du troisième hash de référence (R_H3).

7. Procédé d'authentification selon l'une quelconque des revendications 4 et 5, comprenant un choix du nombre aléatoire (RND) par le système d'authentification (A_SYS) et la lecture du premier hash (R_H1) stocké dans la carte à puce (SC) par le système d'authentification (A_SYS), l'obtention, par le système d'authentification (A_SYS), du troisième hash de référence (R_H3) comprenant le calcul du troisième hash de référence (R_H3) par le système d'authentification (A_SYS).

8. Procédé de sécurisation d'une carte à puce (SC) comprenant un procédé de stockage sécurisé selon l'une des revendications 1 à 3 et un procédé d'authentification selon l'une des revendications 4 à 7.

9. Programme d'ordinateur comprenant des suites d'instructions mettant en oeuvre les étapes du procédé selon l'une des revendications 1 à 8 lorsqu'elles sont exécutées par des processeurs.

10. Supports de stockage non transitoires lisibles par ordinateur comprenant un programme d'ordinateur selon la revendication 9.

11. Système de stockage sécurisé (S_SYS),
le système de stockage sécurisé (S_SYS) étant agencé pour calculer un premier hash (R_H1) à partir d'un code source (O_SRC), ledit code source (O_SRC) correspondant à un code binaire (O_EXE) ;
le système de stockage sécurisé (S_SYS) étant agencé pour stocker le premier hash (R_H1) et le code binaire (O_EXE) dans la carte à puce (SC) ;
le système de stockage sécurisé (S_SYS) étant agencé pour transmettre à un système d'authentification (A_SYS) un nombre aléatoire (P_RND) et un troisième hash (R_H3), le troisième hash (R_H3) étant calculé à partir d'une concaténation du premier hash (R_H1), d'un deuxième hash (R_H2) et du nombre aléatoire (P_RND), le deuxième hash (R_H2) étant calculé à partir du code binaire (O_EXE).

12. Système d'authentification (A_SYS) pour l'authentification d'un code binaire (EXE_SC) stocké dans une carte à puce (SC),
le système d'authentification (A_SYS) étant agencé pour obtenir un troisième hash de référence (R_H3) ;
le système d'authentification (A_SYS) étant agencé pour obtenir un troisième hash effectif (E_H3) à partir d'une concaténation d'un premier hash (R_H1), d'un deuxième hash (E_H2) et d'un nombre aléatoire (RND), le premier hash (R_H1) étant stocké dans la carte à puce (SC), le deuxième hash (E_H2) étant calculé à partir du code binaire (EXE_SC) à authentifier ;
le système d'authentification (A_SYS) étant agencé pour authentifier le code binaire (EXE_SC) sur la base d'une comparaison d'un troisième hash de référence (R_H3) et du troisième hash effectif (E_H3).

13. Système de sécurisation d'une carte à puce (SC) comprenant un système de stockage sécurisé (S_SYS) selon la revendication 11 et un système d'authentification (A_SYS) selon la revendication 12.

## Patentansprüche

1. Verfahren zur gesicherten Speicherung eines Binärcodes (O_EXE) in einer Chipkarte (SC), umfassend:
/a/ das Berechnen, durch ein System zur gesicherten Speicherung (S_SYS), eines ersten Hash (R_H1) anhand eines Quellcodes (O_SRC), wobei der Quellcode (O_SRC) dem Binärcode (O_EXE) entspricht;
/b/ das Speichern, durch das System zur gesicherten Speicherung (S_SYS), des ersten Hash (R_H1) und des Binärcodes (O_EXE) in der Chipkarte (SC);
/c/ das Übertragen, durch das System zur gesicherten Speicherung (S_SYS) an ein Authentifizierungssystem (A_SYS), einer Zufallszahl (P_RND) und eines dritten Hash (R_H3), wobei der dritte Hash (R_H3) anhand einer Verkettung des ersten Hash (R_H1), eines zweiten Hash (R_H2) und der Zufallszahl (P_RND) berechnet wird, wobei der zweite Hash (R_H2) anhand des Binärcodes (O_EXE) berechnet wird.

2. Verfahren zur gesicherten Speicherung nach Anspruch 1, umfassend das Speichern der Zufallszahl (P_RND) durch das System zur gesicherten Speicherung (S_SYS) in der Chipkarte (SC).

3. Verfahren zur gesicherten Speicherung nach einem der vorstehenden Ansprüche, umfassend das Speichern von mindestens einem aus dem zweiten Hash (R_H2) und dem dritten Hash (R_H3) durch das System zur gesicherten Speicherung (S_SYS) in der Chipkarte (SC).

4. Verfahren zur Authentifizierung eines in einer Chipkarte (SC) gespeicherten Binärcodes (EXE_SC), umfassend:
/d/ das Erhalten, durch ein Authentifizierungssystem (A_SYS), eines dritten Referenz-Hash (R_H3);
/e/ das Erhalten, durch das Authentifizierungssystem (A_SYS), eines dritten effektiven Hash (E_H3) anhand einer Verkettung eines ersten Hash (R_H1), eines zweiten Hash (E_H2) und einer Zufallszahl (RND), wobei der erste Hash (R_H1) in der Chipkarte (SC) gespeichert ist, wobei der zweite Hash (E_H2) anhand des Binärcodes (EXE_SC) berechnet wird, der authentifiziert werden soll;
/f/ das Authentifizieren, durch das Authentifizierungssystem (A_SYS), des Binärcodes (EXE_SC) auf der Basis eines Vergleichs eines dritten Referenz-Hash (R_H3) und des dritten effektiven Hash (E_H3).

5. Authentifizierungsverfahren nach Anspruch 4, umfassend das Übertragen der Zufallszahl (RND) durch das Authentifizierungssystem (A_SYS) an die Chipkarte (SC).

6. Authentifizierungsverfahren nach einem der Ansprüche 4 und 5, wobei die Zufallszahl (RND) eine vorbestimmte Zufallszahl (P_RND) ist, die vom Authentifizierungssystem (A_SYS) empfangen wird, wobei das Erhalten, durch das Authentifizierungssystem (A_SYS), des dritten Referenz-Hash (R_H3) das Empfangen, durch das Authentifizierungssystem (A_SYS), des dritten Referenz-Hash (R_H3) umfasst.

7. Authentifizierungsverfahren nach einem der Ansprüche 4 und 5, umfassend ein Auswählen der Zufallszahl (RND) durch das Authentifizierungssystem (A_SYS) und das Lesen des in der Chipkarte (SC) gespeicherten ersten Hash (R_H1) durch das Authentifizierungssystem (A_SYS), wobei das Erhalten, durch das Authentifizierungssystem (A_SYS), des dritten Referenz-Hash (R_H3) das Berechnen des dritten Referenz-Hash (R_H3) durch das Authentifizierungssystem (A_SYS) umfasst.

8. Verfahren zur Sicherung einer Chipkarte (SC), umfassend ein Verfahren zur gesicherten Speicherung nach einem der Ansprüche 1 bis 3 und ein Authentifizierungsverfahren nach einem der Ansprüche 4 bis 7.

9. Computerprogramm, umfassend Anweisungsfolgen, welche die Schritte des Verfahrens nach einem der Ansprüche 1 bis 8 umsetzen, wenn sie von Prozessoren ausgeführt werden.

10. Nicht flüchtige computerlesbare Speicherträger, die ein Computerprogramm nach Anspruch 9 umfassen.

11. System zur gesicherten Speicherung (S_SYS),
wobei das System zur gesicherten Speicherung (S_SYS) dafür eingerichtet ist, einen ersten Hash (R_H1) anhand eines Quellcodes (O_SRC) zu berechnen, wobei der Quellcode (O_SRC) einem Binärcode (O_EXE) entspricht;
wobei das System zur gesicherten Speicherung (S_SYS) dafür eingerichtet ist, den ersten Hash (R_H1) und den Binärcode (O_EXE) in der Chipkarte (SC) zu speichern;
wobei das System zur gesicherten Speicherung (S_SYS) dafür eingerichtet ist, eine Zufallszahl (P_RND) und einen dritten Hash (R_H3) an ein Authentifizierungssystem (A_SYS) zu übertragen, wobei der dritte Hash (R_H3) anhand einer Verkettung des ersten Hash (R_H1), eines zweiten Hash (R_H2) und der Zufallszahl (P_RND) berechnet wird, wobei der zweite Hash (R_H2) anhand des Binärcodes (O_EXE) berechnet wird.

12. Authentifizierungssystem (A_SYS) zur Authentifizierung eines in einer Chipkarte (SC) gespeicherten Binärcodes (EXE_SC),
wobei das Authentifizierungssystem (A_SYS) dafür eingerichtet ist, einen dritten Referenz-Hash (R_H3) zu erhalten;
wobei das Authentifizierungssystem (A_SYS) dafür eingerichtet ist, einen dritten effektiven Hash (E_H3) anhand einer Verkettung eines ersten Hash (R_H1), eines zweiten Hash (E_H2) und einer Zufallszahl (RND) zu erhalten, wobei der erste Hash (R_H1) in der Chipkarte (SC) gespeichert ist, wobei der zweite Hash (E_H2) anhand des Binärcodes (EXE_SC) berechnet wird, der authentifiziert werden soll;
wobei das Authentifizierungssystem (A_SYS) dafür eingerichtet ist, den Binärcode (EXE_SC) auf der Basis eines Vergleichs eines dritten Referenz-Hash (R_H3) und des dritten effektiven Hash (E_H3) zu authentifizieren.

13. System zur Sicherung einer Chipkarte (SC), umfassend ein System zur gesicherten Speicherung (S_SYS) nach Anspruch 11 und ein Authentifizierungssystem (A_SYS) nach Anspruch 12.

## Claims

1. Method for securely storing a binary code (O_EXE) in a chip card (SC), comprising:
/a/ the calculation, by a secure storage system (S_SYS), of a first hash (R_H1) on the basis of a source code (O_SRC), said source code (O_SRC) corresponding to the binary code (O_EXE);
/b/ the storage, by the secure storage system (S_SYS), of the first hash (R_H1) and of the binary code (O_EXE) in the chip card (SC);
/c/ the transmission, by the secure storage system (S_SYS) to an authentication system (A_SYS), of a random number (P_RND) and of a third hash (R_H3), the third hash (R_H3) being calculated on the basis of a concatenation of the first hash (R_H1), of a second hash (R_H2) and of the random number (P_RND), the second hash (R_H2) being calculated on the basis of the binary code (O_EXE).

2. Method for secure storage according to claim 1, comprising the storage, by the system for secure storage (S_SYS), of the random number (P_RND) in the chip card (SC).

3. Method for secure storage according to any one of the previous claims, comprising the storage in the chip card (SC), by the system for secure storage (S_SYS), of at least one out of the second hash (R_H2) and the third hash (R_H3).

4. Method for authentication of a binary code (EXE_SC) stored in a chip card (SC), comprising:
/d/ obtaining, by an authentication system (A_SYS), of a third reference hash (R_H3);
/e/ obtaining, by the authentication system (A_SYS), of a third effective hash (E_H3) on the basis of a concatenation of a first hash (R_H1), a second hash (E_H2), and a random number (RND), the first hash (R_H1) being stored in the chip card (SC), the second hash (E_H2) being calculated using the binary code (EXE_SC) to be authenticated;
/f/ the authentication, by the authentication system (A_SYS), of the binary code (EXE_SC) on the basis of a comparison of a third reference hash (R_H3) and the third effective hash (E_H3).

5. Authentication method according to claim 4, comprising the transmission of the random number (RND) by the authentication system (A_SYS) to the chip card (SC).

6. Authentication method according to any one of claims 4 and 5, the random number (RND) being a predetermined random number (P_RND) received by the authentication system (A_SYS), the obtaining, by the authentication system (A_SYS), of the third reference hash (R_H3) comprising the reception, by the authentication system (A_SYS), of the third reference hash (R_H3).

7. Authentication method according to any one of claims 4 and 5, comprising a selection of the random number (RND) by the authentication system (A_SYS) and the reading of the first hash (R_H1) stored in the chip card (SC) by the authentication system (A_SYS), the obtaining, by the authentication system (A_SYS), of the third reference hash (R_H3) comprising the calculation of the third reference hash (R_H3) by the authentication system (A_SYS).

8. Method for securing a chip card (SC), comprising a method for secure storage according to one of claims 1 to 3 and an authentication method according to one of claims 4 to 7.

9. Computer program comprising series of instructions implementing the steps of the method according to one of claims 1 to 8 when they are executed by processors.

10. Non-transitory storage media readable by a computer comprising a computer program according to claim 9.

11. A secure storage system (S_SYS),
the secure storage system (S_SYS) being arranged to calculate a first hash (R_H1) on the basis of a source code (O_SRC), said source code (O_SRC) corresponding to a binary code (O_EXE);
the secure storage system (S_SYS) being arranged to store the first hash (R_H1) and the binary code (O_EXE) in the chip card (SC);
the secure storage system (S_SYS) being arranged to transmit, to an authentication system (A_SYS), a random number (P_RND) and a third hash (R_H3), the third hash (R_H3) being calculated on the basis of a concatenation of the first hash (R_H1), a second hash (R_H2) and the random number (P_RND), the second hash (R_H2) being calculated on the basis of the binary code (O_EXE).

12. Authentication system (A_SYS) for authenticating a binary code (EXE_SC) stored in a chip card (SC),
the authentication system (A_SYS) being arranged to obtain a third reference hash (R_H3);
the authentication system (A_SYS) being arranged to obtain a third effective hash (E_H3) on the basis of a concatenation of a first hash (R_H1), a second hash (E_H2) and a random number (RND), the first hash (R_H1) being stored in the chip card (SC), the second hash (E_H2) being calculated on the basis of the binary code (EXE_SC) to be authenticated;
the authentication system (A_SYS) being arranged to authenticate the binary code (EXE_SC) on the basis of a comparison of a third reference hash (R_H3) and of the third effective hash (E_H3).

13. System for securing a chip card (SC), comprising a system for secure storage (S_SYS) according to claim 11 and an authentication system (A_SYS) according to claim 12.
